(19) Europäisches Patentamt
European Patent Office
Office européen des brevets

(11) EP 3 579 141 A1

(12) **DEMANDE DE BREVET EUROPEEN**

(43) Date de publication:
**11.12.2019 Bulletin 2019/50**

(51) Int Cl.:
**G06K 9/00** *(2006.01)*

(21) Numéro de dépôt: **19178180.6**

(22) Date de dépôt: **04.06.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **08.06.2018 FR 1855027**

(71) Demandeur: **Commissariat à l'énergie atomique et aux énergies alternatives**
**75015 Paris (FR)**

(72) Inventeurs:
• **PERRIER, Régis**
  **38054 GRENOBLE CEDEX 09 (FR)**
• **BOURJOT, Mathilde**
  **38400 SAINT MARTIN D'HERES (FR)**

(74) Mandataire: **Brevalex**
**95, rue d'Amsterdam**
**75378 Paris Cedex 8 (FR)**

(54) **PROCEDE DE TRAITEMENT D'UNE IMAGE D'EMPREINTE PAPILLAIRE**

(57) L'invention concerne un procédé de traitement d'une empreinte papillaire comprenant :

a) une étape de détection sur l'image d'une zone singulière, la zone singulière étant caractérisée par une position (p), et une orientation ($\theta$) représentative d'une valeur du gradient de l'intensité de l'image ;

b) une étape d'extraction de vignettes témoins chacune des vignettes témoins comprenant une des zones singulières détectées à l'étape a), et étant avantageusement centrée sur ladite zone singulière;

c) une étape de projection des vignettes témoins dans une base de référence, de manière à déterminer des coordonnées de projection de chacune des vignettes témoins sur ladite base de référence, la projection d'une vignette témoins sur la base de référence formant une vignette projetée ;

d) une étape de calcul d'un écart de projection des vignettes témoins par rapport au vignettes projetées.

FIG.2

**Description**

**DOMAINE TECHNIQUE**

La présente invention concerne un procédé de traitement d'une image d'une empreinte papillaire, en particulier pour la détermination de la qualité de ladite image. La présente invention concerne également un programme d'ordinateur adapté pour la mise en oeuvre du procédé de traitement de l'image d'une empreinte papillaire.

Enfin, la présente invention concerne un dispositif pourvu du programme d'ordinateur destiné à mettre en oeuvre le procédé de traitement de l'image de l'empreinte papillaire.

**ÉTAT DE LA TECHNIQUE ANTÉRIEURE**

La biométrie intègre bon nombre de produits de consommation, et notamment des objets grand public tels que des téléphones portables, des ordinateurs portables, des organisateurs personnels ou tout autre élément nécessitant une identification d'un individu.

La biométrie met généralement en oeuvre la reconnaissance de caractéristiques morphologiques d'un individu, comme par exemple les empreintes papillaires, par comparaison avec une ou plusieurs données de référence préalablement acquises et enregistrées lors d'une étape, dite étape d'enrôlement, et représentative(s) desdites caractéristiques morphologiques.

L'obtention de données de référence de qualité est alors primordiale pour garantir une efficacité optimale du système d'identification mis en oeuvre. Ainsi, l'enrôlement d'une empreinte papillaire comme donnée de référence est généralement suivie d'une évaluation de la qualité de cette dernière.

Cette étape d'évaluation, relativement aisée pour un oeil humain exercé, s'avère nettement plus compliquée pour un ordinateur et, peut ainsi nécessiter la mise en oeuvre d'algorithmes ou de calculs complexes, comme des méthodes de filtrage, des mesures statistiques sur la répartition des pixels ou des contours, ou encore des méthodes « boites noires » de type réseaux de neurones. Ces méthodes exigent cependant des capacités et des temps de calcul qui ne sont pas toujours compatibles avec une mise en oeuvre dans des objets de plus en plus miniaturisés.

En outre, ces méthodes sont peu ou pas sensibles à la quantité d'information discriminante effectivement contenue dans ladite image.

Le document [1] cité à la fin de la description s'intéresse aux zones singulières d'une empreinte digitale, et notamment aux points singuliers (définis dans la suite de l'énoncé) de ladite empreinte, pour la reconnaissance et/ou l'identification d'un individu.

Les zones singulières d'une empreinte papillaire peuvent être classées, selon une échelle décroissante, en caractéristiques d'ordre 1, 2 et 3.

Les caractéristiques d'ordre 1 sont relatives à la forme globale de l'empreinte, et regroupent par exemple les arches, les boucles ou encore les tourbillons.

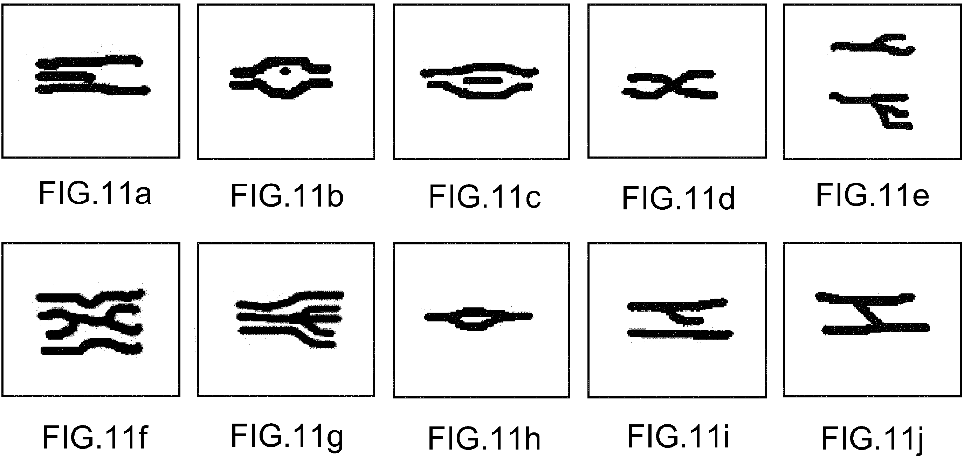

Les caractéristiques d'ordre 2 et 3 (aussi appelés « points singuliers ») d'une empreinte papillaire rassemblent des motifs permettant de différentier deux empreintes papillaires présentant la même forme globale, et représentent donc une information discriminante. Les figures 11a à 11j illustrent, de manière non exhaustive, des exemples de caractéristiques d'ordre 2. Les caractéristiques d'ordre 3 regroupent les pores ainsi que les variations d'épaisseur des crêtes et des vallées.

Nous notons toutefois que ce document [1] n'évoque en aucune manière l'évaluation de la quantité d'information discriminante effectivement contenue dans une empreinte d'enrôlement.

Ce nouveau critère revêt néanmoins une importance considérable dans la mesure où la taille relativement réduite des capteurs d'empreintes intégrés dans les objets commerciaux diminue d'autant la quantité d'informations discriminantes, et par voie de conséquence, la capacité des algorithmes à distinguer un individu d'un autre relativement à une donnée de référence.

Un but de la présente invention est donc de proposer un procédé de traitement d'image d'une empreinte papillaire simple à mettre en oeuvre et d'exécution rapide par rapport aux méthodes connues de l'homme du métier.

Un autre but de la présente invention est également de proposer un procédé de traitement d'une empreinte papillaire permettant à la fois une évaluation de la qualité de ladite empreinte acquise et de la quantité d'informations pertinentes qu'elle contient.

Un autre but de la présente invention est aussi de pouvoir proposer une reconnaissance d'une empreinte papillaire par rapport à une image d'enrôlement.

Un autre but de la présente invention est de proposer un procédé de traitement fiable d'une empreinte papillaire obtenue avec un capteur de petite taille, et notamment de taille inférieure à 50 mm$^2$.

## EXPOSÉ DE L'INVENTION

Les buts de l'invention sont, au moins en partie, par un procédé de traitement d'une image d'une empreinte papillaire destiné à être exécuté par un calculateur, comprenant :

a) une étape de détection sur l'image d'au moins une zone singulière, chaque zone singulière étant caractérisée par une position (p), et une orientation ($\theta$) représentative d'une valeur du gradient de l'intensité de l'image à la position (p) ;

b) une étape d'extraction de vignettes, dites vignettes témoins, chacune des vignettes témoins comprenant une des zones singulières détectées à l'étape a), et étant avantageusement centrée sur ladite zone singulière;

c) une étape de projection des vignettes témoins dans une base de vignettes de référence, dite base de référence, de manière à déterminer des coordonnées de projection de chacune des vignettes témoins sur ladite base de référence, la projection d'une vignette témoins sur la base de référence formant une vignette projetée, la base de vignettes de référence comprenant au moins deux vignettes de référence associées chacune à une zone singulière de type différent ;

d) une étape de calcul d'un écart de projection des vignettes témoins par rapport au vignettes projetées.

Selon un mode de mise en oeuvre, la base de vignettes de références comprend des vignettes de référence associées à au moins deux zones singulières distinctes d'ordre 2 et/ou d'ordre 3.

Selon un mode de mise en oeuvre, l'étape b) d'extraction des vignettes témoins comprend en outre une étape d'orientation desdites vignettes selon un axe principal de manière à aligner les zones singulières avec ledit axe.

L'orientation des vignettes permet ainsi de faciliter l'étape c) de projection des vignettes sur la base de vignettes de référence, et également diminuer les temps de calcul.

Cette réorientation permet également de faciliter la comparaison desdites vignettes réorientées avec leur projection sur la base de vignettes de référence.

Selon un mode de mise en oeuvre, l'étape a) de détection de zones singulières sur l'image comprend une détection d'une variation de contraste de l'intensité de l'image d'enrôlement.

Selon un mode de mise en oeuvre, la détection de la variation de contraste comprend le calcul de dérivées spatiales de l'intensité en chacune des positions de l'image d'enrôlement.

Selon un mode de mise en oeuvre, l'étape a) comprend la mise oeuvre de la méthode de Harris.

Selon un mode de mise en oeuvre, chaque vignette témoin, extraite à l'étape b), est écrite sous forme vectorielle, la forme vectorielle comprenant, pour composantes, les intensités relatives à chaque pixel de la vignette considérée.

Selon un mode de mise en oeuvre, l'étape d) de calcul de l'écart de projection comprend le calcul d'une erreur, dite erreur de construction, ladite erreur de construction comprenant le calcul de la somme normalisée des différences de chaque vignette témoins par rapport à sa vignette reconstruite.

Selon un mode de mise en oeuvre, une image d'enrôlement est qualifiée d'image de qualité dès lors que l'erreur de construction est inférieure à une valeur prédéterminée.

Selon un mode de mise en oeuvre, procédé comprend en outre une étape e) de quantification d'une information discriminante contenue dans l'image d'enrôlement, ladite information discriminante étant relative aux points singuliers effectivement détectés à l'étape a).

Selon un mode de mise en oeuvre, l'étape e) comprend l'évaluation de la dispersion d'au moins deux coordonnées de projection, pour l'ensemble des vignettes témoins, et relatives à au moins deux vignettes de référence dites vignettes de référence principales.

Selon un mode de mise en oeuvre, les zones singulières détectées à l'étape a) comprennent des caractéristiques d'ordre 2 ou supérieur.

Selon un mode de mise en oeuvre, la base de référence est construite à partir d'au moins une image de référence, d'au moins une empreinte papillaire.

Selon un mode de mise en oeuvre, la construction de la base de référence comprend les étapes suivantes :

a1) une étape de détection, sur l'au moins une image de référence, de zones singulières, chaque zone singulière, dite zone singulière primitive, étant caractérisée par une position p1, et une orientation $\theta1$ représentative d'une valeur du gradient de l'intensité de l'image de référence à la position p1 ;

b1) une étape d'extraction de vignettes, dites vignettes primitives, chacune des vignettes primitive étant centrée sur une des zones singulières primitives détectées à l'étape a1) ;

c1) une étape d'analyse en composantes principales de l'ensemble de vignettes primitives orientées de manière à en extraire la base de référence et de valeurs propres de référence associées.

Selon un mode de mise en oeuvre, les zones singulières détectées à l'étape a1) comprennent des caractéristiques d'ordre 1 ou supérieurs, avantageusement des caractéristiques d'ordre 2 ou supérieurs.

Selon un mode de mise en oeuvre, l'étape b1) d'extraction des vignettes primitives comprend en outre une étape d'orientation desdites vignettes selon l'axe principal de manière à aligner les zones singulières primitives avec ledit axe.

L'invention concerne également un programme d'ordinateur comprenant des instructions qui, lorsque le programme est exécuté par un ordinateur, conduisent à mettre en oeuvre le procédé selon la présente invention.

L'invention concerne en outre un dispositif électronique pourvu du programme d'ordinateur, et doté d'un capteur d'empreintes papillaires dont les images d'empreinte acquises par le capteur d'empreinte sont destinées à être traitées par ledit programme d'ordinateur.

## BRÈVE DESCRIPTION DES DESSINS

D'autres caractéristiques et avantages apparaîtront dans la description qui va suivre en référence aux dessins annexés dans lesquels :

- la figure 1 est une image d'enrôlement d'une empreinte papillaire sur laquelle le procédé de traitement selon la présente invention est mis en oeuvre ;
- la figure 2 est une représentation schématique de vignettes orientées extraites de l'image d'enrôlement de la figure 1 à l'étape b) du procédé selon la présente invention ;
- les figures 3a à 3c représentent, respectivement, une première image d'enrôlement, une première série de vignettes orientées extraites de la première image et une représentation de l'erreur de construction selon la présente invention ;
- les figures 4a à 4c représentent, respectivement, une seconde image d'enrôlement, une seconde série de vignettes orientées extraites de la seconde image et une représentation de l'erreur de construction selon la présente invention ;
- les figures 5a à 5e sont des représentations d'images d'enrôlement agencées selon une qualité décroissante ;
- les figures 6a et 6b sont, respectivement, une image d'empreinte papillaire contenant peu d'informations discriminantes et un ensemble de vignettes orientées extraites de ladite image ;
- les figures 7a et 7b sont, respectivement, une image d'empreinte papillaire contenant des informations discriminantes et un ensemble de vignettes orientées extraites de ladite image ;
- les figures 8a et 8b sont des représentations graphiques de la dispersion des coordonnées de projection des vignettes dans la base de référence, respectivement, des figures 6a et 7a, selon les deux premiers axes de la base de référence ;
- les figures 9a à 9c sont des représentations des étapes successives d'un procédé de construction d'une base de vignettes de référence ;
- les figures 10a à 10d sont des représentations d'images d'enrôlements classées selon une quantité d'information discriminante décroissante, la quantité d'information discriminante étant évaluée par la valeur « R » indiquée au-dessus ce chaque image (R étant le rapport entre la coordonnée de projection la plus élevée sur la coordonnée de projection la moins élevée) ;
- les figures 11a à 11j sont des représentations de minuties susceptibles d'être observées au niveau d'une empreinte papillaire.

## EXPOSÉ DÉTAILLÉ DE MODES DE RÉALISATION PARTICULIERS

La présente invention propose un procédé de traitement d'une image d'une empreinte papillaire, dite image d'enrôlement. En particulier, la présente invention propose un procédé destiné à déterminer la qualité de l'image d'enrôlement.

A cet égard, il est proposé de limiter le traitement de l'image d'enrôlement à des zones singulières (également appelés caractéristique d'ordre 1 à 3 par exemple) de l'empreinte et de confronter l'image de ces dernières à une base de référence. Plus particulièrement, l'invention comprend dans un premier temps une extraction de vignettes témoins, éventuellement orientées, de l'image d'enrôlement, chacune centrées sur des zones singulières de ladite image.

Les vignettes témoins extraites sont alors projetées sur une base de vignettes de références, notamment une base orthogonale, dont résulte un ensemble de vignettes projetées.

Le calcul de la somme des distances euclidiennes entre chacune des vignettes témoins et sa projection permet alors d'établir la qualité de l'image d'enrôlement.

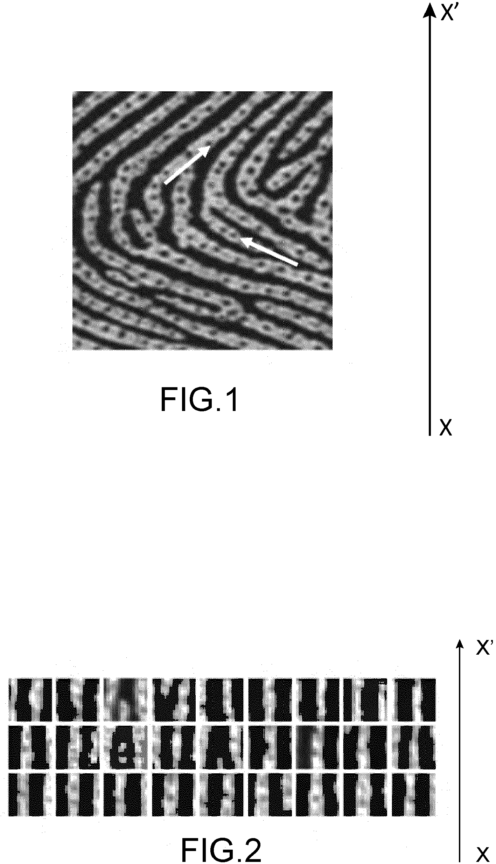

L'invention va maintenant être décrite de manière détaillée en relation avec les figures 1, 2 et 3a à 3c.

La figure 1 représente une image d'une empreinte papillaire, qui dans ce cas est digitale, l'image étant nommée ci-après image d'enrôlement.

Il est entendu, dans toute la suite de l'énoncé qu'une image est un agencement de pixels, notamment un agencement matriciel de pixels, selon deux directions orthogonales. En outre, il est également entendu que chaque pixel est représentatif d'une valeur d'intensité de l'image, à l'endroit même du pixel considéré.

La suite de l'énoncé fera également appel à la notion de « vignettes » qui sont également des images, et pour lesquelles les définitions précédemment citées s'appliquent. Plus précisément, une vignette représente une partie d'une image donnée. De préférence, les vignettes sont découpées de manière à ce que chaque vignette comprenne une information discriminante d'une empreinte (aussi appelée zone singulière ou caractéristique dans la suite de la description).

L'image d'enrôlement peut être le résultat d'une acquisition d'empreinte papillaire par un capteur, notamment un capteur optique ou un capteur capacitif, de taille quelconque. Toutefois, selon la présente invention, le capteur peut être de petite taille, et peut plus particulièrement présenter une surface inférieure à 50 mm$^2$, par exemple être égale à 20 mm$^2$.

Le procédé de traitement comprend une étape a) de détection des zones singulières de l'image d'enrôlement. Par « zones singulières », on entend des changements de continuité des lignes papillaires introduisant alors des points autour desquels des variations de valeur de pixel peuvent être observées.

Pour rappel, les zones singulières d'une empreinte papillaire sont regroupées en trois sous-ensembles dits caractéristiques d'ordre, respectivement, 1, 2 et 3.

Les caractéristiques d'ordre 1 regroupent les arches, les boucles et les tourbillons.

Les caractéristiques d'ordre 2 et 3 regroupent des points dits points singuliers.

A cet égard, les figures 11a à 11j illustrent de manière non exhaustive des caractéristiques d'ordre 2. Les caractéristiques d'ordre 3 comprennent les pores et les variations d'épaisseur des crêtes et des vallées. L'invention est particulièrement adaptée pour détecter les caractéristiques d'ordre 2, voire d'ordres 3 et supérieurs.

Ainsi, le groupe des caractéristiques d'ordre 2 (et également d'ordre 3) regroupe plusieurs types de points singuliers. Il pourra être considéré dans la suite de l'énoncé, différents types intra ordre (au sein d'un même ordre de caractéristiques) ou inter ordre (entre deux ordres de caractéristiques différents) de points singuliers.

Une zone singulière, et plus particulièrement un point singulier, est alors caractérisée par sa position p dans l'image et son orientation θ dans l'image. La position p correspond aux coordonnées des pixels formant la zone singulière dans le référentiel de l'image. L'orientation θ (détaillée par la suite) est représentative d'une valeur du gradient des valeurs des pixels composant la zone singulière à la position p.

Dans la description qui suit, « le gradient des valeurs des pixels composant la zone singulière à la position p » est appelé gradient local d'intensité. Plus précisément par « local », il est fait référence à la vignette comme cela sera décrit plus loin. Les positions et les orientations de ces zones singulières permettent alors de distinguer un individu parmi d'autres, ou un doigt parmi d'autres. Les zones singulières, et notamment les points singuliers, sont des points pour lesquels les dérivées spatiales de l'image dans leur voisinage immédiat sont non nulles.

On peut en particulier observer des zones singulières (ou caractéristiques) d'ordre 2 ou d'ordre supérieur, par exemple d'ordre 3. Notamment, les points singuliers d'ordre 2 (minuties) illustrées aux figures 11a à 11j peuvent comprendre : une terminaison (figure 11a) ; un îlot 1 (figure 11b) ; une variante d'îlot (figure 11c) ; une intersection (figure 11d) ; une bifurcation simple ou multiple (figure 11e) ; un branchement opposé (figure 11f) ; un branchement deltoïde (figure 11g) ; un lac (figure 11h) ; un crochet (figure 11i) ; et/ou un pont (figure 11j).

En tout état de cause, les points singuliers qu'ils soient d'ordre 2 ou d'ordre 3, caractérisent une rupture de continuité des lignes papillaires et peuvent à ce titre être détectés sur la base de cette rupture de continuité.

Une technique particulièrement adaptée à la détection de zones singulières, en particulier les caractéristiques d'ordre 2 et supérieures, est la méthode ou détecteur de Harris décrite dans le document [2] cité à la fin de la description. Cette méthode comprend notamment un balayage de la surface de l'image selon un pas donné (par exemple un pixel) par une fenêtre d'une taille prédéterminée, et une évaluation de la différence ou de l'erreur entre deux fenêtres successives. Dès lors que l'erreur est supérieure à une valeur seuil, il est conclu à la présence d'une minutie.

La détection de zones singulières, ainsi que leur repérage sur l'image d'enrôlement selon l'invention, ne sont pas limitées à la mise en oeuvre du détecteur de Harris. Aussi, l'homme du métier pourra appliquer d'autres méthodes comme par exemple les méthodes SUSAN ou SIFT décrites, respectivement, dans les documents [3] et [4] cités à la fin de la description.

L'examen de la figure 1 révèle également de manière notable que les points singuliers d'ordre 2 présentent une « orientation » (repérée par des flèches blanches sur la figure 1), notée par la suite orientation θ. Cette dernière correspond à l'orientation générale des lignes papillaires à l'endroit même d'un point singulier d'ordre 2 donné, c'est-à-dire en considérant une tangente à au moins l'une des lignes papillaires formant ledit point singulier, et est représentative à l'échelle de la vignette de l'intensité de l'image d'enrôlement à la position p. L'orientation θ est en particulier exprimée par rapport à un axe principal noté XX' sur la figure 1.

L'orientation θ au point de coordonnées x et y dans le référentiel de l'image d'enrôlement peut notamment être estimée avec la relation suivante :

$$\theta(x, y) = arctan2\left(\nabla_{\sigma\theta}^{y}E(x, y), \nabla_{\sigma\theta}^{x}E(x, y)\right)$$

Où:

$\nabla_{\sigma\theta}^{y}E(x, y)$ est le gradient selon la direction y du référentiel de l'image d'enrôlement ;

$\nabla_{\sigma\theta}^{x}E(x, y)$ est le gradient selon la direction x du référentiel de l'image d'enrôlement.

L'étape a) est suivie d'une étape b) d'extraction de vignettes (figure 2), dites vignettes témoins.

Les vignettes témoins peuvent être chacune centrée sur un des points singuliers détectés à l'étape a).

En complément ou de manière alternative, les vignettes témoins peuvent être orientées selon le sens de l'axe principal XX' de manière à aligner les tangentes des points singuliers identifiés selon ledit axe. En d'autres termes, l'orientation d'une vignette associée à un point singulier d'orientation θ comprend la rotation du point singulier selon un angle -θ.

L'orientation des vignettes permet ainsi de faciliter l'étape c) (décrite ci-après) de projection des vignettes sur la base de vignettes de référence, et également diminuer les temps de calcul.

Cette réorientation permet également de faciliter la comparaison desdites vignettes réorientées avec leur projection sur la base de vignettes de référence.

La suite de la description ne fera référence qu'à des vignettes témoin orientées et notés vignettes orientées.

Il est entendu sans qu'il soit nécessaire de le préciser que les vignettes, notamment les vignettes orientées, sont des portions de l'image d'enrôlement, et de taille inférieure à l'image d'enrôlement. Par exemple, la taille des vignettes (la taille d'une vignette correspond à la dimension de l'un et l'autre de ses côtés) peut être comprise entre 1/4 et 1/3 de la largeur d'une ligne papillaire.

Par ailleurs, chaque vignette orientée, indicée « i », représente alors un vecteur $\mathbf{v_i}$ dont les composantes correspondent aux intensités de chacun des pixels composant ladite vignette orientée.

Le procédé comprend en outre une étape c) de projection des vignettes orientées dans une base de vignettes comprenant des vignettes de référence $\mathbf{b_j}$, (avec par exemple j un nombre entier compris entre 1 à k), appelée base de référence dans la suite de la description. La base de référence peut être une base établie et faire l'objet d'une construction dont une méthode sera décrite dans la suite de l'énoncé.

La base de vignettes de référence comprend avantageusement au moins deux vignettes de références associées de deux types de points singuliers différents. Il peut s'agir de deux types d'un même ordre de caractéristique (intra ordre) ou de deux ordres de caractéristiques différents (inter ordre).

Avantageusement, la base de vignettes de référence comprend des vignettes de référence associées à des types de zones singulières d'ordre 2.

De manière alternative et/ou complémentaire, la base de vignettes de référence comprend des vignettes de référence associées à des types de zones singulières d'ordre 3.

Il est également avantageux de considérer plus que deux types, et par exemple couvrir les 10 types d'ordre 2 illustrés aux figures 11a à 11j, ainsi que les types d'ordre 3.

La richesse de la base de référence permet une meilleure représentation des vignettes orientées à l'issue de l'étape de projection.

La projection des vignettes orientées dans la base de référence permet de déterminer des coordonnées de projection $\alpha_{ij}$ de chacune des vignettes orientées sur ladite base.

Chacune des coordonnées de projection $\alpha_{ij}$ d'un vignette orientée i sur une vignette de référence $\mathbf{b_j}$ est égale au produit scalaire entre le vecteur $\mathbf{v_i}$ de chaque vignette orientées et celui des vignettes de référence $\mathbf{b_j}$ :

$$\alpha_{ij} = \boldsymbol{v}_i^T \boldsymbol{b}_j$$

A partir de ces coordonnées de projection, le procédé comprend la construction d'une vignette appelée vignette reconstruite $\mathbf{w_i}$. Cette vignette reconstruite est déterminée à partir d'une combinaison linéaire :

$$\boldsymbol{w}_i = \sum_{j=1}^{k} \alpha_{ij}\boldsymbol{b}_j$$

Où k correspond au nombre de vignettes de référence sélectionnées pour la construction de cette vignette reconstruite. On comprend alors que plus k est grand, plus la vignette reconstruite se rapprochera de la vignette orientée. En effet, la détermination de la vignette reconstruite permet de chercher à s'approcher le plus de la vignette orientée à partir de la base de référence.

L'étape de projection est, dans le cas de la recherche d'une image d'enrôlement fiable, suivie d'une étape d) de calcul d'un écart de projection des vignettes témoins par rapport aux vignettes projetées. L'écart de projection peut être un indicateur de qualité de l'image d'enrôlement sur la base des coordonnées de projection $\alpha_{ij}$ déterminées à l'étape c).

Notamment, l'étape d) peut comprendre le calcul d'une erreur, dite erreur de construction. A titre d'exemple, l'erreur de construction « e » peut comprendre le calcul de la somme normalisée des distances euclidiennes de chaque vignette orientée par rapport à sa vignette projetée.

Plus particulièrement, l'erreur de construction « e » peut être estimée de la manière suivante en calculant la moyenne des normes des erreurs entre vignettes orientées et vignettes reconstruites :

$$e = \frac{\sum_{i=1}^{m} \|v_i - w_i\|}{m}$$

m étant le nombre de vignettes orientées effectivement extraites à l'étape b).

Ainsi, l'erreur e permet de comparer les vignettes reconstruites et les vignettes d'enrôlement préalablement stockées dans une base d'enrôlement comprenant les vignettes de l'image d'enrôlement. Il est à noter que, la base de référence et la base d'enrôlement ne pourraient former qu'une seule et unique base si l'erreur de construction e est convenable, par exemple inférieure à une valeur seuil. Autrement dit, des vignettes d'enrôlement peuvent être ajoutées à la base de référence au fur et à mesure que l'erreur de construction e est située en dessous de la valeur seuil.

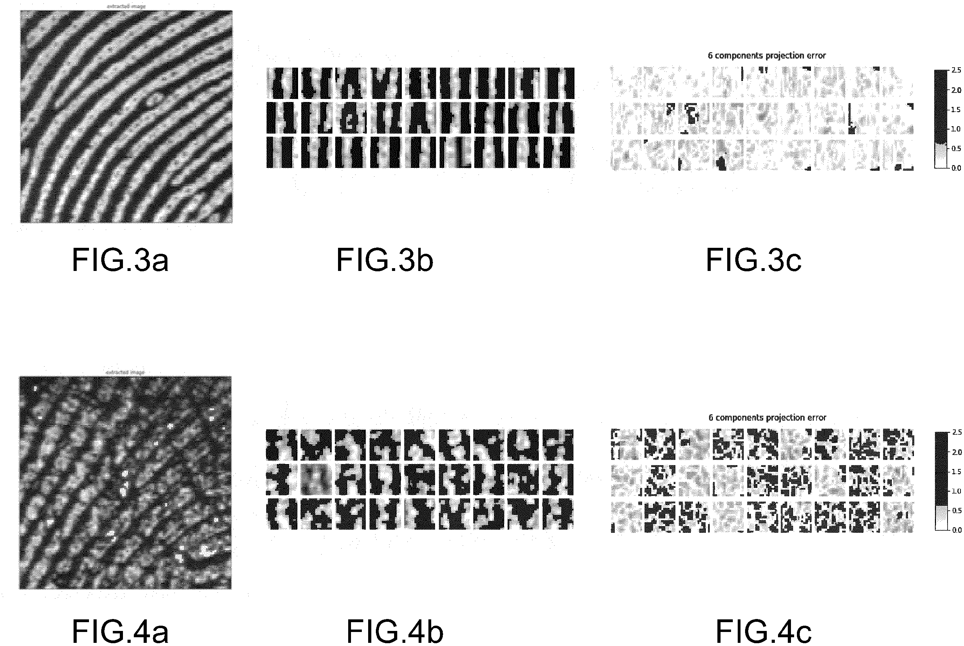

Les figures 3a-3c et 4a-4c illustrent, respectivement, chacune un exemple comparatif du procédé de traitement d'une première (figure 3a) et d'une seconde (figure 4a) image d'enrôlement ayant des qualités différentes. L'extraction de vignettes orientées à partir de la première et de la seconde image d'enrôlement donne, respectivement, une première série de vignettes orientées (figure 3b) et une seconde série de vignettes orientées (figure 4b).

Les figures 3c et 4c représentent, respectivement, les erreurs de construction « e » associées au traitement de la première image et de la seconde image. Ces deux figures montrent très clairement, au tout le moins leurs contrastes en niveaux de gris, que l'erreur de construction est plus importante dans le cas du traitement de la seconde image que dans celui de la première image.

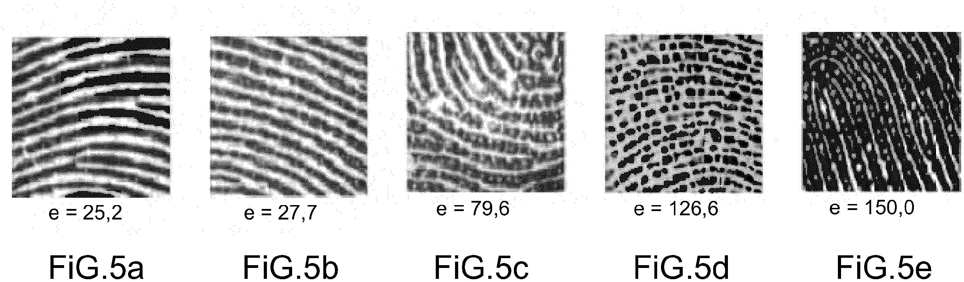

Toujours à titre d'illustration, les figures 5a à 5e représentent dans l'ordre des images d'enrôlement de qualité (visuelle) décroissante. Les erreurs de construction (données en dessous de chacune des images d'enrôlements) calculées selon la présente invention suivent la même tendance et démontrent une qualité décroissante de l'image 5a à l'image 5e.

Ces résultats prévisibles à l'aide d'un simple examen visuel peuvent donc, selon la présente invention, être évalués ainsi de manière automatique et objective avec un traitement informatique approprié selon la présente invention, sans toutefois nécessiter des ressources informatiques considérables.

Ainsi, à l'aide d'un critère sur l'erreur de construction e, par exemple par l'établissement d'une valeur seuil de ladite erreur, il peut être établi qu'une image d'enrôlement satisfait ou non à un niveau de qualité prédéterminé.

Dans le cas d'une reconnaissance d'empreinte, le procédé comprend une comparaison, par exemple par le même calcul que l'erreur de construction, entre vignettes de référence et vignettes d'enrôlement préalablement stockées dans la base d'enrôlement. Ainsi, pour procéder à de la reconnaissance, il n'est pas nécessaire de reconstruire les vignettes, on peut rester dans la base d'enrôlement et comparer les coordonnées alphas de deux vignettes projetées dans celle-ci pour savoir si elles sont similaires.

Le procédé peut en outre comprendre une étape e) de quantification d'une information discriminante contenue dans l'image d'enrôlement, ladite information discriminante étant relative aux points singuliers effectivement détectées à l'étape a). Plus particulièrement, le procédé de traitement peut comprendre une étape de mesure de la variété des vignettes orientées extraites à l'étape b).

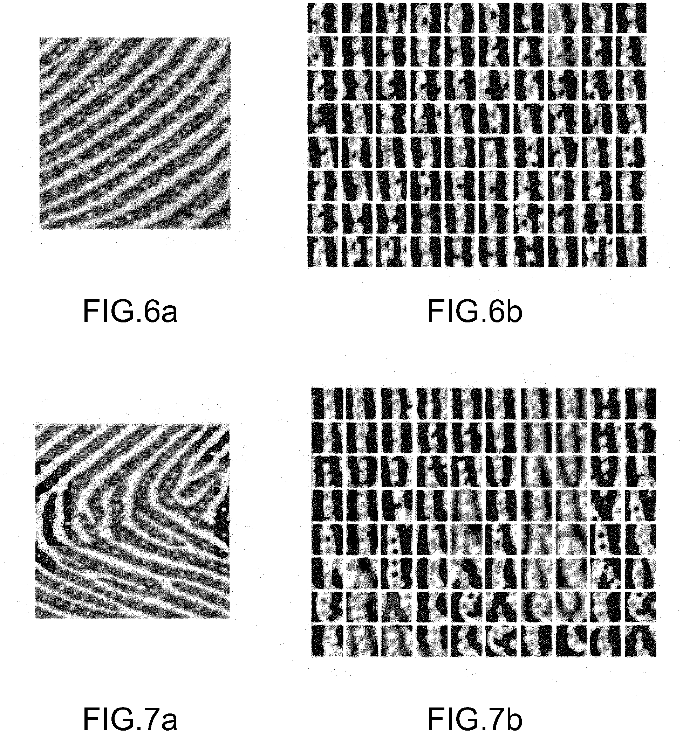

A titre d'exemple, les figures 6a-6b et 7a-7b illustrent le cas d'une empreinte peu discriminante (figure 6a) et celui d'une empreinte discriminante (figure 7a). L'empreinte peu discriminante (figure 6a) présente peu ou pas de ruptures de lignes papillaires. Plus particulièrement, pratiquement aucun point singulier d'ordre 2 n'est observé. Les vignettes orientées extraites de cette empreinte (figure 6b) sont relativement peu variées de sorte qu'un processus de reconnaissance exécuté sur la base de cette empreinte serait peu fiable.

A contrario, la figure 7a associée à une empreinte nettement plus discriminante. Nombre de bifurcations, de réorientation ou encore de ruptures de continuité des lignes papillaires peuvent être observées sur cette empreinte. Il en résulte des vignettes orientées (figure 7b) d'aspects variés.

L'évaluation bien que précédemment discutée selon un caractère visuel, peut également être traitée de manière plus systématique et objective selon les termes de la présente invention. En particulier, l'étape e) peut comprendre l'évaluation de la dispersion d'au moins deux coordonnées de projection, pour l'ensemble des vignettes orientées, et relatives à au moins deux vignettes de référence dites vignettes de référence principales.

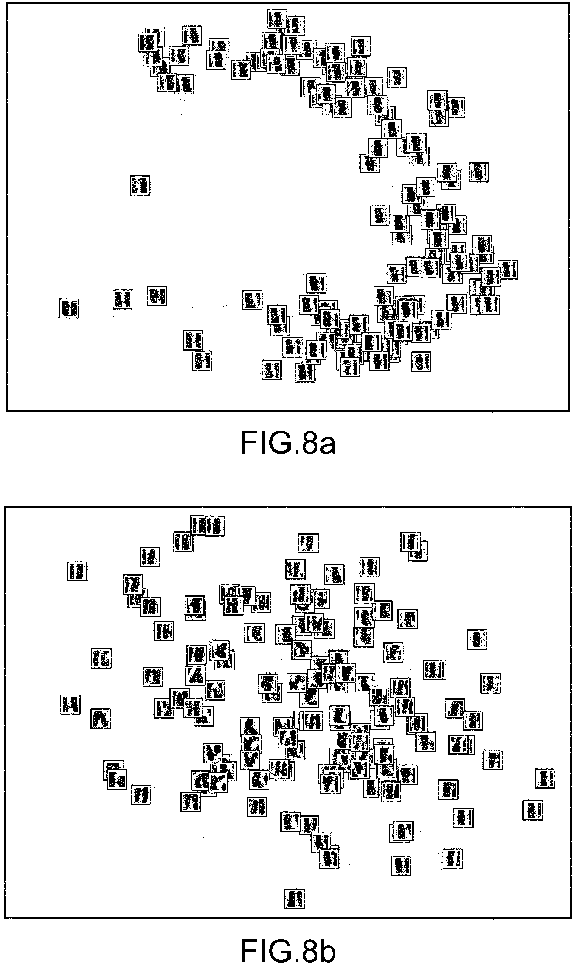

A cet égard, les figures 8a et 8b représentent, respectivement, les dispersions de deux coordonnées de projection de l'empreinte de la figure 6a et de l'empreinte de la figure 7a.

On observe ainsi, en relation avec l'empreinte peu discriminante (figure 8a), une dispersion des coordonnées de projection moins importante que dans le cas de l'empreinte discriminante (figure 8b). Ainsi, un critère chiffré sur la quantité d'information discriminante conduirait à refuser l'empreinte de la figure 6a et à accepter celle de la figure 7a.

Un exemple de procédé de construction de la base de référence va maintenant être décrit. Toutefois, il est bien entendu possible de mettre en oeuvre le procédé de traitement d'une image d'une empreinte papillaire à l'aide d'une base de référence préalablement établie.

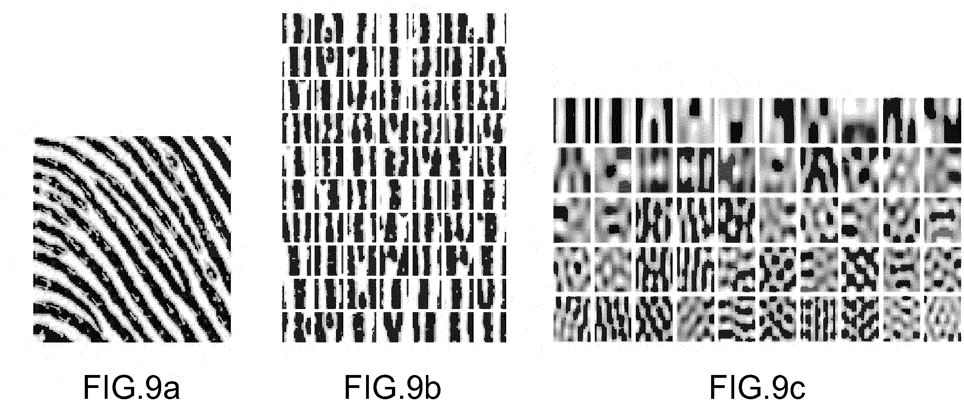

Les figures 9a à 9c représentent les étapes successives d'un procédé de construction de la base de référence.

La base de référence peut être construite à partir d'au moins une image, dite image de référence (figure 9a), d'au moins une empreinte papillaire. Par exemple, le nombre d'images de référence peut être supérieur à 5, de préférence supérieur à 10, par exemple égal à 15.

La qualité de la base de référence construite selon le procédé décrit ci-après peut dépendre de la qualité, et notamment de la qualité visuelle, de l'image de référence.

Une étape de sélection de l'image de référence selon des critères visuels, tant sur la qualité de l'image que sur l'information discriminante qu'elle contient, peut être mise en oeuvre préalablement à la construction de la base de référence.

Ce choix peut être déterminant dès lors que la base de référence construite est mise en oeuvre pour la reconnaissance et/ou l'identification d'individus via leurs empreintes papillaires.

La construction de la base de référence peut comprendre une étape a1) de détection, sur l'au moins une image de référence, de point singuliers d'ordre 2 ou supérieur.

Chaque point singulier est caractérisé par une position p1, et une orientation $\theta 1$ représentative d'une valeur du gradient local de l'intensité de l'image de référence à la position p1.

Cette étape est similaire à l'étape a) décrite précédemment.

Le procédé de construction de la base de référence comprend également une étape b1) d'extraction de vignettes, dites vignettes primitives.

Chacune des vignettes primitives est centrée sur une des zones singulières détectées à l'étape a1), et peut être orientée selon l'axe principal XX' de manière à aligner lesdites zones singulières selon ledit axe.

Cette étape est également similaire à l'étape b) décrite précédemment.

Enfin, le procédé de construction de la base de référence comprend également une étape c1) d'analyse en composantes principales (dite « ACP ») de l'ensemble des vignettes primitives, éventuellement orientées, de manière à former la base de référence et extraire des valeurs propres de référence associées à chaque vignette primitive.

L'étape c1) d'ACP permet notamment de réécrire les vecteurs formés par les vignettes primitives sous forme d'une combinaison linéaire de vecteurs, habituellement appelés « vecteurs propres », ces vecteurs formant la base de référence qui est orthogonale. La combinaison linéaire est notamment pondérée par des facteurs de pondération, autrement nommés « valeurs propres », et associés chacun à une vignette de référence autrement nommée « vecteur propre ».

L'étape c1) d'ACP comprend, à cet égard, les étapes suivantes :

- écriture de l'ensemble des vignettes de référence sous la forme d'une matrice rectangulaire M, chaque colonne de la matrice contenant une vignette sous la forme d'un vecteur,
- calcul du produit matriciel $MM^T$ afin de déterminer les vecteurs propres et les valeurs propres associés à l'ACP

Il peut être considéré de ne conserver qu'une partie des vignettes de référence pour former la base de référence. Notamment, seuls les k (par exemple k=20) vecteurs propres associés aux valeurs propres les plus élevées peuvent être conservés.

Cette hiérarchisation des vignettes de références selon leurs valeurs propres associées peut avantageusement être mise à profit pour l'évaluation de la quantité d'information discriminante effectivement contenue dans une image d'enrôlement. Notamment, en relation avec les figures 8a et 8b discutées précédemment, seules les projections des vignettes orientées sur les vignettes de références, nommées $b_1$ et $b_2$, associées aux deux valeurs propres les plus élevées sont considérées afin de quantifier la quantité d'information discriminante. La quantité d'information discriminante peut par exemple correspondre au rapport R entre la coordonnée de projection la plus élevé sur la coordonnée de projection la moins élevée.

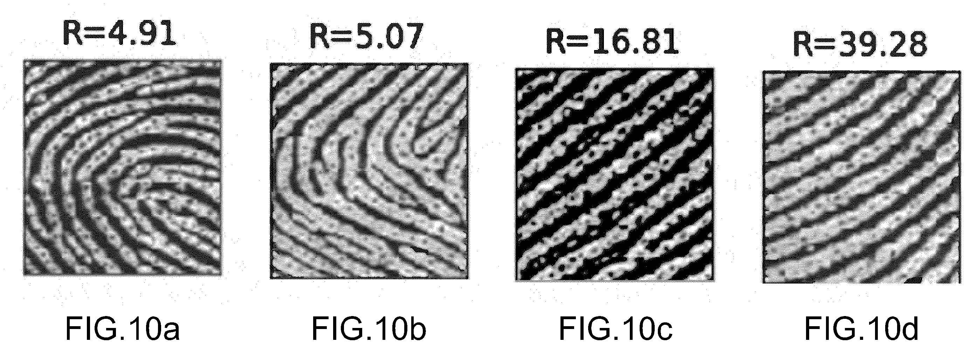

En particulier, les figures 10a à 10d représentent des images d'enrôlement classées visuellement selon une quantité d'information discriminante décroissante. Le rapport R, mentionné au-dessus de chacune de ces figures, est conforme au classement visuel.

Il est également notable que la dispersion de l'orientation θ de chacun des points singuliers détectés à l'étape a) peut également être prise en compte pour mesurer la quantité d'information discriminante effectivement contenue dans une image d'enrôlement.

L'invention décrite précédemment permet donc de simplifier le traitement des empreintes papillaires.

Il permet par ailleurs de juger non seulement de la qualité d'une image d'enrôlement mais également de quantifier l'information discriminante effectivement contenue dans ladite image. Ce procédé est par conséquent tout indiqué dès lors que la taille de l'image d'enrôlement est réduite.

L'invention concerne également un programme d'ordinateur comprenant des instructions qui, lorsque le programme est exécuté par un ordinateur, conduisent à mettre en oeuvre le procédé de traitement d'une image d'une empreinte selon la présente invention.

L'invention concerne également un dispositif électronique pourvu du programme d'ordinateur précédemment cité, et doté d'un capteur d'empreintes papillaires dont les images d'empreinte acquises sont destinées à être traitées par ledit programme d'ordinateur. Par exemple, le dispositif est un téléphone portable, un ordinateur portable, un système d'ouverture sécurisé, ou une poignée, notamment une poignée d'un véhicule.

**RÉFÉRENCES CITEES**

[1] Mathilde Bourjot, Régis Perrier, Jean-François Mainguet, « Etude d'algorithmes d'authentification pour petits capteurs d'empreinte digitale », Colloque CORESA, 2017 ;

[2] C. Harris et al., « A combined corner and edge detector », Fourth Alvey Vision Conference, pages 147-151, 1988;

[3] S.M. Smith et al., "A new approach to low level image processing", Technical Report TR95SMS1c;

[4] D.G. Lowe et al., « Distinctive image features from scale-invariant keypoints », International Journal of Computer Vision, 60(2), pages 91-110, 2004 ;

**Revendications**

**1.** Procédé de traitement d'une image d'une empreinte papillaire destiné à être exécuté par un calculateur, comprenant :

a) une étape de détection sur l'image d'au moins une zone singulière, chaque zone singulière étant **caractérisée par** une position (p), et une orientation (θ) représentative d'une valeur du gradient de l'intensité de l'image à la position (p) ;

b) une étape d'extraction de vignettes, dites vignettes témoins, chacune des vignettes témoins comprenant une des zones singulières détectées à l'étape a), et étant avantageusement centrée sur ladite zone singulière;

c) une étape de projection des vignettes témoins dans une base de vignettes de référence, dite base de référence, de manière à déterminer des coordonnées de projection de chacune des vignettes témoins sur ladite base de référence, la projection d'une vignette témoins sur la base de référence formant une vignette projetée, la base de vignettes de référence comprenant au moins deux vignettes de référence associées chacune à une zone singulière de type différent ;

d) une étape de calcul d'un écart de projection des vignettes témoins par rapport au vignettes projetées.

**2.** Procédé selon la revendication 1, dans lequel la base de vignettes de références comprend des vignettes de référence associées à au moins deux zones singulières d'ordre 2 et/ou d'ordre 3.

**3.** Procédé selon la revendication 1 ou 2, dans lequel l'étape b) d'extraction des vignettes témoins comprend en outre une étape d'orientation desdites vignettes selon un axe principal de manière à aligner les zones singulières avec ledit axe.

**4.** Procédé selon l'une des revendications 1 à 3, dans lequel l'étape a) de détection de zones singulières sur l'image comprend une détection d'une variation de contraste de l'intensité de l'image d'enrôlement.

**5.** Procédé selon la revendication 4, dans lequel la détection de la variation de contraste comprend le calcul de dérivées spatiales de l'intensité en chacune des positions de l'image d'enrôlement.

**6.** Procédé selon la revendication 4 ou 5, dans lequel l'étape a) comprend la mise oeuvre de la méthode de Harris.

**7.** Procédé selon l'une des revendications 1 à 6, dans lequel chaque vignette témoin, extraite à l'étape b), est écrite sous forme vectorielle, la forme vectorielle comprenant, pour composantes, les intensités relatives à chaque pixel de la vignette considérée.

**8.** Procédé selon l'une des revendications 1 à 7, dans lequel l'étape d) de calcul de l'écart de projection comprend le calcul d'une erreur, dite erreur de construction, ladite erreur de construction comprenant le calcul de la somme normalisée des différences de chaque vignette témoins par rapport à sa vignette reconstruite.

**9.** Procédé selon la revendication 8, dans lequel une image d'enrôlement est qualifiée d'image de qualité dès lors que l'erreur de construction est inférieure à une valeur prédéterminée.

**10.** Procédé selon l'une des revendications 1 à 9, dans lequel le procédé comprend en outre une étape e) de quantification d'une information discriminante contenue dans l'image d'enrôlement, ladite information discriminante étant relative aux points singuliers effectivement détectés à l'étape a).

**11.** Procédé selon la revendication 10, dans lequel l'étape e) comprend l'évaluation de la dispersion d'au moins deux coordonnées de projection, pour l'ensemble des vignettes témoins, et relatives à au moins deux vignettes de référence dites vignettes de référence principales.

**12.** Procédé selon l'une des revendications 1 à 11, dans lequel les zones singulières détectées à l'étape a) comprennent des caractéristiques d'ordre 2 ou supérieur.

**13.** Procédé selon l'une des revendications 1 à 12, dans lequel la base de référence est construite à partir d'au moins une image de référence, d'au moins une empreinte papillaire.

**14.** Procédé selon la revendication 13, dans lequel la construction de la base de référence comprend les étapes suivantes :

a1) une étape de détection, sur l'au moins une image de référence, de zones singulières, chaque zone singulière, dite zone singulière primitive, étant **caractérisée par** une position p1, et une orientation $\theta$1 représentative d'une valeur du gradient de l'intensité de l'image de référence à la position p1 ;
b1) une étape d'extraction de vignettes, dites vignettes primitives, chacune des vignettes primitive étant centrée sur une des zones singulières primitives détectées à l'étape a1) ;
c1) une étape d'analyse en composantes principales de l'ensemble de vignettes primitives orientées de manière à en extraire la base de référence et de valeurs propres de référence associées.

**15.** Procédé selon la revendication 14, dans lequel les zones singulières détectées à l'étape a1) comprennent des caractéristiques d'ordre 1 ou supérieurs, avantageusement des caractéristiques d'ordre 2 ou supérieurs.

**16.** Procédé selon la revendication 14 ou 15, dans lequel l'étape b1) d'extraction des vignettes primitives comprend en outre une étape d'orientation desdites vignettes selon l'axe principal de manière à aligner les zones singulières primitives avec ledit axe.

**17.** Programme d'ordinateur comprenant des instructions qui, lorsque le programme est exécuté par un ordinateur, conduisent à mettre en oeuvre le procédé selon l'une des revendications 1 à 16.

**18.** Dispositif électronique pourvu du programme d'ordinateur selon la revendication 17, et doté d'un capteur d'empreintes papillaires dont les images d'empreinte acquises par le capteur d'empreinte sont destinées à être traitées par ledit programme d'ordinateur.

FIG.1

X'

X

FIG.2

X'

X

FIG.3a

FIG.3b

FIG.3c

FIG.4a

FIG.4b

FIG.4c

e = 25,2  FiG.5a

e = 27,7  FiG.5b

e = 79,6  FiG.5c

e = 126,6  FiG.5d

e = 150,0  FiG.5e

FIG.6a

FIG.6b

FIG.7a

FIG.7b

FIG.8a

FIG.8b

FIG.9c

FIG.9b

FIG.9a

FIG.10a  FIG.10b  FIG.10c  FIG.10d

FIG.11a  FIG.11b  FIG.11c  FIG.11d  FIG.11e
FIG.11f  FIG.11g  FIG.11h  FIG.11i  FIG.11j

Europäisches
Patentamt

European
Patent Office

Office européen
des brevets

**RAPPORT DE RECHERCHE EUROPEENNE**

Numéro de la demande

EP 19 17 8180

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | Ching-Tang Hsieh et al.: "Principal Component Analysis for Minutiae Verification on FingerprintImage", Proceedings of the 7th WSEAS Int. Conference on Multimedia Systems & Signal Processing, 15 avril 2007 (2007-04-15), XP002789039, Hangzhou Extrait de l'Internet: URL:http://citeseerx.ist.psu.edu/viewdoc/download?doi=10.1.1.124.3970&rep=rep1&type=pdf [extrait le 2019-02-18] * Section 2, 3; figure 3 * | 1-18 | INV. G06K9/00 |
| A | XUNQIANG TAO ET AL: "A novel measure of fingerprint image quality using Principal Component Analysis(PCA)", BIOMETRICS (ICB), 2012 5TH IAPR INTERNATIONAL CONFERENCE ON, IEEE, 29 mars 2012 (2012-03-29), pages 170-175, XP032215571, DOI: 10.1109/ICB.2012.6199804 ISBN: 978-1-4673-0396-5 * abrégé * * Section 2.1, 2.2 * | 1-18 | |
| | | | DOMAINES TECHNIQUES RECHERCHES (IPC) |
| | | | G06K |
| A | US 2010/080425 A1 (BEBIS GEORGE [US] ET AL) 1 avril 2010 (2010-04-01) * alinéas [0042], [0048], [0102] - [0107] * | 1-18 | |

Le présent rapport a été établi pour toutes les revendications

| Lieu de la recherche | Date d'achèvement de la recherche | Examinateur |
|---|---|---|
| La Haye | 14 octobre 2019 | Meurisse, Wim |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

3

**ANNEXE AU RAPPORT DE RECHERCHE EUROPEENNE
RELATIF A LA DEMANDE DE BREVET EUROPEEN NO.**

EP 19 17 8180

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-10-2019

| Document brevet cité au rapport de recherche | Date de publication | Membre(s) de la famille de brevet(s) | Date de publication |
|---|---|---|---|
| US 2010080425 A1 | 01-04-2010 | AUCUN | |

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MATHILDE BOURJOT ; RÉGIS PERRIER ; JEAN-FRANÇOIS MAINGUET.** Etude d'algorithmes d'authentification pour petits capteurs d'empreinte digitale. *Colloque CORESA,* 2017
- **C. HARRIS et al.** A combined corner and edge detector. *Fourth Alvey Vision Conference,* 1988, 147-151
- **S.M. SMITH et al.** A new approach to low level image processing. *Technical Report TR95SMS1c*
- **D.G. LOWE et al.** Distinctive image features from scale-invariant keypoints. *International Journal of Computer Vision,* 2004, vol. 60 (2), 91-110